(19) Europäisches Patentamt
European Patent Office
Office européen des brevets

(11) EP 0 448 420 B1

(12) FASCICULE DE BREVET EUROPEEN

(45) Date de publication et mention de la délivrance du brevet:
**10.04.1996 Bulletin 1996/15**

(51) Int Cl.$^6$: **C08L 23/08**, C08K 5/20
// (C08L23/08, C08K5:20)

(21) Numéro de dépôt: **91400362.9**

(22) Date de dépôt: **13.02.1991**

(54) **Compositions glissantes, anti-bloquantes et de qualité optique à base de copolymères d'éthylène de faible cristallinité**

Leichtgleitende, anti-blockierende, optisch klare Zusammensetzungen aus Äthylencopolymerisaten niedriger Kristallinität

High slip, anti-blocking, optically clear compositions of low crystallinity ethylene copolymers

(84) Etats contractants désignés:
**AT BE CH DE DK ES FR GB GR IT LI LU NL SE**

(30) Priorité: **19.02.1990 FR 9001977**

(43) Date de publication de la demande:
**25.09.1991 Bulletin 1991/39**

(73) Titulaire: **ELF ATOCHEM S.A.**
**F-92800 Puteaux (FR)**

(72) Inventeur: **Breant, Patrice**
**F-62350 Robecq (FR)**

(56) Documents cités:
**EP-A- 0 068 148**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 448 420 B1

## Description

La présente invention se rapporte à des compositions à base de copolymères d'éthylène de faible cristallinité, présentant de bonnes propriétés optiques, anti-bloquantes et de glissant, ainsi que des articles industriels, notamment fibres et plaques, obtenus à partir de ces compositions.

Dans l'industrie de transformation des matières plastiques en films, le terme "bloquant" désigne le phénomène d'adhérence d'un film sur lui-même qui peut avoir de nombreuses causes, notamment une température d'extrusion trop élevée, mais aussi la nature même de la matière plastique à extruder. Pour éviter ce phénomène de bloquant en cours d'extrusion, puis ultérieurement sur les bobines de film, et pour faciliter l'ouverture de la gaine de polymère obtenue par extrusion-soufflage, il est usuel d'ajouter au polymère divers additifs ayant pour fonction de modifier l'état de surface du film, notamment par migration vers la surface. Ceci est notamment le cas des homopolymères et des copolymères d'éthylène. Des additifs usuels sont des charges minérales, telles que la silice, ou organiques comme certains amides d'acide gras insaturés ayant au moins 8 atomes de carbone, en particulier les amides stéarique, oléique, palmitique, érucique, myristique, béhénique et laurique.

Par exemple le brevet européen n° 060 178 décrit une composition anti-bloquante à base de polymère d'éthylène comprenant de 200 à 2500 ppm de talc.

Les additifs usuels précités donnent toute satisfaction, en ce qui concerne la fonction anti-bloquante, pour les polymères et copolymères de l'éthylène de moyenne et forte cristallinité, c'est-à-dire ceux dont la cristallinité déterminée par diffraction des rayons X est au moins égale à 30% environ : il s'agit en particulier du polyéthylène haute densité (0,96 à 0,97 environ), du polyéthylène basse densité radicalaire (0,92 à 0,93 environ) et du polyéthylène basse densité linéaire, c'est-à-dire des copolymères d'éthylène et d'au moins une alpha-oléfine possédant de 3 à 8 atomes de carbone ayant une densité de 0,91 à 0,95 environ. En effet pour tous ces polymères l'addition de jusqu'à 2% environ des charges anti-bloquantes précitées n'affecte pas défavorablement et sensiblement d'autres propriétés, notamment optiques et mécaniques, exigées des films.

Il en va tout différemment pour les copolymères de l'éthylène de faible cristallinité, c'est-à-dire ceux dont la cristallinité déterminée par diffraction des rayons X est inférieure ou égale à 30% environ. Dans ce cas en effet on observe une sensible dégradation des propriétés optiques des films, due au fait que des proportions beaucoup plus importantes (pouvant atteindre jusqu'à 10%) des additifs usuels seraient nécessaires pour réduire le caractère bloquant jusqu'à un niveau acceptable. Dans certains cas extrêmes, tels que par exemple celui d'un copolymère comprenant 70% en poids d'éthylène et 30% en poids d'acrylate de méthyle, non seulement les propriétés optiques sont fortement dégradées mais encore le caractère bloquant reste 25 fois supérieur au niveau généralement acceptable malgré l'addition de 10% d'une charge anti-bloquante usuelle telle que le talc.

Un premier problème que l'invention vise à résoudre consiste donc à sélectionner une charge qui, incorporée à un copolymère d'éthylène de faible cristallinité tel que défini précédemment, permette d'éviter le phénomène de bloquant sans pour autant dégrader sensiblement les propriètés optiques et/ou mécaniques des films extrudés à partir de ce copolymère.

Par ailleurs, le caractère glissant d'une matière thermoplastique est également un paramètre important pour l'industrie de transformation, où il faut éviter l'accrochage de la matière dans les systèmes de guidage des machines automatiques. Ce caractère glissant est généralement évalué par un coefficient de frottement statique ou dynamique sur la face externe qui mesure le rapport de la force de traction à appliquer pour amorcer ou entretenir le glissement des deux faces à la force qui les appuie l'une contre l'autre. Pour un emploi régulier, sans troubles de fabrication, la plupart des machines de transformation exigent un coefficient de frottement sur la face externe ne dépassant pas 0,2 environ. Ce résultat a été atteint jusqu'ici par incorporation au polymère d'éthylène d'un mélange de sel métallique et d'acide gras et d'un amide gras saturé, par exemple un mélange de stéarate de zinc et d'érucylamide. Cette solution, bien qu'efficace, présente l'inconvénient pratique de nécessiter au cours de la transformation le dosage et le contrôle de deux ingrédients dans des proportions très faibles par rapport à la matière plastique constituant principal.

Un second problème que l'invention vise à résoudre consiste donc à sélectionner un additif qui, incorporé à un copolymère d'éthylène de faible cristallinité tel que défini précédemment, permette d'atteindre à lui seul un coefficient de frottement sur la face externe, statique ou dynamique, ne dépassant pas 0,2 environ.

La présente invention est basée sur la découverte surprenante que les deux problèmes exposés précédemment peuvent être simultanément résolus en incorporant une quantité efficace d'éthylène-bis-oléamide à un copolymère d'éthylène de faible cristallinité.

Un premier objet de la présente invention concerne donc des fibres, films ou plaques glissants, anti-bloquants et de qualité optique comprenant au moins un copolymère d'éthylène de cristallinité ne dépassant pas 30% environ, caractérisés en ce qu'ils comprennent en outre une quantité efficace d'éthylène-bis-oléamide de formule :

$$CH_3-(CH_2)_7-CH = CH-(CH_2)_7-\overset{O}{\overset{\|}{C}} - NH-(CH_2)_2-NH - \overset{O}{\overset{\|}{C}}-(CH_2)_7-CH = CH-(CH_2)_7-CH_3$$

Par quantité efficace, on entend une quantité suffisante pour réduire le caractère bloquant et/ou le coefficient de frottement dynamique ou statique sur la face externe de la composition jusqu'à un niveau acceptable pour la transformation de ladite composition en fonction des caractéristiques de la machine de transformation et en fonctions de l'application finale visée. Dans la plupart des cas, les propriétés recherchées sont :

- un coefficient de frottement statique ou dynamique sur la face externe ne dépassant pas 0,2 environ,
- un caractère bloquant, déterminé selon la méthode décrite ci-après, ne dépassant pas une valeur de 20 g environ,
- un trouble optique, déterminé selon la norme ASTM D-1003, au plus égal à 13% environ.

Parmi les copolymères d'éthylène de faible cristallinité pouvant entrer dans la constitution de la composition selon l'invention on peut citer notamment les copolymères polaires de l'éthylène ayant une teneur en comonomères au moins égale à 0,09 mole environ pour 100 g de copolymère tels que :

- copolymères d'éthylène et d'au moins un acrylate ou méthacrylate d'alkyle dont le groupe alkyle a de 1 à 10 atomes de carbone (parmi ceux-ci particulièrement les copolymères éthylène/acrylate de méthyle comprenant au moins 8% en poids d'acrylate) ;
- copolymères d'éthylène et d'au moins un ester vinylique d'acide carboxylique saturé ayant 2 à 6 atomes de carbone tel que l'acétate de vinyle ou le propionate de vinyle ;
- terpolymères éthylène/ (méth)acrylate d'alkyle/ anhydride d'acide dicarboxylique insaturé (comprenant jusqu'à 15% en moles de (méth)acrylate et jusqu'à 3% en moles d'anhydride tel que l'anhydride maléique, tels que décrits dans le brevet FR-A-2 498 609 ;
- copolymères éthylène/monomère glycidylique insaturé et terpolymères éthylène/monomère éthylénique insaturé/monomère glycidylique insaturé comprenant jusqu'à 50% en poids d'un monomère glycidylique tel que méthacrylate et acrylate de glycidyle, itaconate de mono- et diglycidyle, butènetricarboxylate de mono-, di- et triglycidyle et le cas échéant jusqu'à 45% en poids d'un monomère éthylénique tel qu'un ester vinylique d'acide carboxylique saturé ayant de 2 à 6 atomes de carbone, un acrylate ou méthacrylate d'alcool saturé ayant de 1 à 8 atomes de carbone ou un ester d'acide maléique avec un alcool saturé ayant de 1 à 18 atomes de carbone, tels que décrits dans le brevet FR-A-2 130 279 ;
- copolymères éthylène/anhydride d'acide dicarboxylique insaturé/poly(méth)acrylate de polyol (comprenant jusqu'à 3% en moles d'anhydride, jusqu'à 0,4% en moles de poly(méth)acrylate de polyol et le cas échéant jusqu'à 13,6% de (méth)acrylate d'alkyle) tels que décrits dans le brevet EP-A-312 459 ;
- copolymères éthylène/(méth)acrylate d'alkyle/ N-carboxyalkylimide d'acide dicarboxylique insaturé (comprenant jusqu'à 14% en moles de (méth)acrylate d'alkyle, jusqu'à 3% en moles de N-carboxyalkylimide et le cas échéant jusqu'à 3% en moles d'anhydride d'acide dicarboxylique insaturé), ceux-ci étant obtenus en faisant réagir à une température comprise entre 150° et 300°C un acide aminoalkylcarboxylique sur un terpolymère éthylène/ (méth) acrylate d'alkyle/anhydride d'acide dicarboxylique insaturé.

Parmi les copolymères d'éthylène de faible cristallinité entrant dans le cadre de la présente invention on peut citer également les copolymères de l'éthylène et d'au moins une alpha-oléfine ayant de 3 à 8 atomes de carbone dont la densité n'est pas supérieure à 0,910, tels que :

- copolymères de densité comprise entre 0,905 et 0,910 environ conformes au brevet européen n° 070 220,
- copolymères de densité comprise entre 0,890 et 0,905 environ, comprenant généralement de 6 à 10% en moles d'alpha-oléfine,
- copolymères de densité comprise ente 0,860 et 0,890 environ tels que notamment :

  . des caoutchoucs polyoléfiniques commercialisés par la société MITSUI sous la marque TAFMER®, consistant en des copolymères de 78 à 92% en moles d'éthylène et de 8 à 22% en moles d'une alpha-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7.
  . des caoutchoucs polyoléfiniques consistant en des copolymères éthylène/propylène et/ou butène-1, ayant un indice de fluidité compris entre 0,3 et 15 dg/min. environ et une densité comprise entre 0,865 et 0,885 environ, comprenant de 77 à 91% en moles de motifs dérivés de l'éthylène et de 9 à 23% en moles de motifs dérivés

du propylène et/ou du butène-1, caractérisés par une température de fusion cristalline J comprise entre 100° et 125°C environ. Subsidiairement, ces caoutchoucs polyoléfiniques selon l'invention peuvent être caractérisés par au moins l'un des éléments suivants :

- un indice de polydispersité compris entre 3,5 et 15 environ, de préférence, entre 4 et 8 environ,
- une masse moléculaire géométrique moyenne (définie comme indiqué ci-après) comprise entre 35 et 70 kg/mole environ,
- une relation entre la densité d et la teneur x (exprimée en % en moles) en motifs dérivés du propylène et du butène-1 qui se traduit par la double équation :
$$0{,}9084 \leq d + 0{,}002\,x \leq 0{,}918$$
- un taux de cristallinité résiduelle (déterminé selon la méthode décrite ci-après) compris entre 3 et 15% environ.

Par température de fusion cristalline J, on entend la température déterminée au maximum de la courbe de fusion après cristallisation obtenue en soumettant l'échantillon de copolymère au processus en trois étapes suivant :

- fusion à la vitesse de 8°C par minute depuis 10°C jusqu'à 150°C, puis
- cristallisation à la vitesse de 8°C par minute depuis 150°C jusqu'à 10°C, puis à nouveau
- fusion à la vitesse de 8°C par minute depuis 10°C jusqu'à 150°C.

Le taux de cristallinité résiduelle est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie par la relation mathématique :

$$\log_{10} Mg = \sum_{i=1}^{i=N} W_i \log_{10} M_i$$

où $W_i$ est la fraction en poids de matière de masse $M_i$ et N est le nombre de fractions eluées par chromatographie sur gel perméable.

De tels caoutchoucs polyoléfiniques peuvent être obtenus par un procédé consistant à copolymériser, à une température de 160° à 270°C environ et sous une pression de 400 à 850 bars environ, un flux gazeux contenant de 18 à 42% environ en volume d'éthylène et de 58% à 82% environ en volume de propylène et/ou de butène-1, en présence d'un système catalytique de type Ziegler comprenant, d'une part, au moins un composé de métal de transition des groupes IVB, VB, VIB et VIII de la Classification Périodique, et d'autres part, au moins un composé organo-aluminique, et, le cas échéant, en présence d'au moins un agent de transfert de chaîne. Le système catalytique peut en outre comprendre au moins un halogénure d'aluminium ou de magnésium. Pour atteindre les copolymères possédant les caractéristiques décrites ci-dessus, et dans lesquels le rapport molaire

$$\frac{\text{motifs dérivés du propylène}}{\text{motifs dérivés du butène-1}}$$

dépasse 0,5, la composition du flux gazeux soumis à la copolymérisation sera de préférence telle que le rapport en volume

$$\frac{\text{propylène}}{\text{butène-1}}$$

dépasse 0,3 environ selon la nature du système catalytique utilisé. Le choix de celui-ci a en effet une influence, connue de l'homme de l'art, sur la réactivité relative de l'éthylène, du propylène et du butène-1 dans la copolymérisation et par conséquent sur la tendance à incorporer préférentiellement des motifs dérivés du propylène ou bien des motifs dérivés du butène-1 dans la chaîne macromoléculaire.

Bien entendu les articles selon l'invention peuvent comprendre un mélange de deux ou plusieurs copolymères tels que décrits précédemment. Outre un ou plusieurs tels copolymères, les articles peuvent aussi comprendre un autre polymère thermoplastique pour lequel les problèmes de bloquant, de glissant et de propriétés optiques sont habituellement résolus au moyen d'autres additifs, tel que notamment :

- un polymère ou copolymère de l'éthylène de cristallinité supérieure à 30% comme par exemple le polyéthylène haute densité (0,96 à 0,97 environ), le polyéthylène basse densité radicalaire (0,92 à 0,93 environ) et les copolymères d'éthylène et d'au moins une alpha-oléfine possédant de 3 à 8 atomes de carbone ayant une densité de 0,91 à 0,95 environ.
- un polymère ou copolymère de propylène comprenant au moins 85% en moles de motifs dérivés du propylène et au plus 15% en moles de motifs dérivés de l'éthylène ou d'une alpha-oléfine ayant de 4 à 8 atomes de carbone.

Généralement le copolymère de l'éthylène de faible cristallinité entrant dans la constitution des articles selon l'invention possède un indice de fluidité - déterminé à 190°C sous 2,16 kg selon la norme ASTM D-1238 - compris entre 0,1 et 10 dg/min. environ. Il en va de même pour le polymère ou copolymère de l'éthylène de cristallinité supérieure à 30% éventuellement présent en mélange avec le copolymère d'éthylène de faible cristallinité.

La proportion d'éthylène-bis-oléamide à incorporer dans les articles selon l'invention dépend de nombreux paramètres, notamment :

- la nature et la proportion des comonomères présents avec l'éthylène dans le copolymère de faible cristallinité,
- l'indice de fluidité du copolymère de faible cristallinité,
- l'épaisseur de l'éprouvette de mesure,
- le niveau des propriétés recherchées (caractère bloquant, glissant, trouble optique), ainsi que le compromis de propriétés accepté en fonction du mode de transformation de la composition et de l'application visée pour l'article transformé.

Le choix de la proportion d'éthylène-bis-oléamide est à la portée de l'homme de l'art en tenant compte des indications générales suivantes : il est le plus souvent recommandé d'utiliser une proportion d'éthylène-bis-oléamide d'autant plus élevée que :

- la cristallinité du copolymère d'éthylène est plus faible, c'est-à-dire la teneur en comonomère(s) est plus élevée et - lorsque le comonomère est une alpha-oléfine - la densité est plus faible,
- l'indice de fluidité du copolymère d'éthylène de faible cristallinité est plus élevé,
- le caractère bloquant recherché se traduit, selon la méthode décrite ci-après, par une valeur plus basse.

Pour la plupart des copolymères d'éthylène de faible cristallinité, les propriétés recherchées pourront être atteintes moyennant l'emploi d'au plus 0,8% en poids, de préférence 0,1 à 0,6% en poids environ, d'éthylène-bis-oléamide par rapport au copolymère d'éthylène de faible cristallinité.

Bien que l'emploi supplémentaire d'additifs usuels présente les inconvénients rappelés en préambule de la présente description, ou pourra dans certains cas, si on le désire, ajouter aux articles selon l'invention :

- au moins un additif anti-bloquant usuel tel que silice, talc ou amide gras saturé, de préférence en proportion ne dépassant pas environ 1% en poids de la composition, et/ou
- au moins un additif améliorant le caractère glissant tel qu'un sel métallique d'acide gras (par exemple le stéarate de zinc), un amide gras saturé (par exemple l'érucylamide) ou l'éthylène-bis-stéaramide, de préférence en proportion ne dépassant pas environ 1% en poids de la composition.

Les articles selon l'invention pourront en outre comprendre de manière comme en soi, au moins un additif usuel des copolymères d'éthylène tel que :

- antioxydant, comme par exemple un phénol à empêchement stérique, un mercaptan ou un phosphorite.
- absorbeurs de rayonnement ultraviolet, tels que les benzophénones substituées, les phénylbenzotriazoles substitués et les amines à empêchement stérique.
- extincteurs tels que des complexes de nickel.
- pigment minéral ou organique, tel que l'oxyde de zinc ou l'oxyde de titane.

Lorsque les articles selon l'invention sont destinés à des applications particulières telles que par exemple la fabrication de films à usage agricole devant offrir une résistance suffisante à certaines conditions climatiques (exposition au rayonnement ultraviolet ou infrarouge), ils pourront en outre comprendre en quantité efficace un ou des additifs capables de procurer ces propriétés particulières, par exemple :

- de 1 à 15% environ en poids de kaolinite déshydratée, conformément par exemple au brevet US-A-4 075 784, en vue de constituer une barrière au rayonnement infrarouge,
- de 0,5 à 4% environ en poids d'oxyde de fer de forme cristallographique gamma, conformément par exemple au brevet FR-A-2 347 405, en vue de fabriquer un film opaque thermique,

- un mélange de 10 à 200 ppm environ d'un sel ionique de fer et de 10 à 1000 ppm environ de soufre, conformément par exemple au brevet FR-A-2 199 757, en vue de fabriquer un film photodégradable,
- de l'oxyde de zinc, conformément par exemple au brevet EP-A-006 049, en vue de fabriquer un film transparent pour emballer des produits susceptibles d'être détériorés par le rayonnement ultraviolet,
- un mélange de particules biodégradables telles que de l'amidon naturel et d'une substance pouvant subir une auto-oxydation pour former un peroxyde et/ou un hydroperoxyde, conformément par exemple au brevet FR-A-2 252 385.

Les articles selon l'invention peuvent être préparés par tout moyen permettant de disperser l'éthylène-bis-oléamide et, le cas échéant, les autres additifs dans le copolymère d'éthylène de faible cristallinité. On peut ainsi utiliser un malaxeur interne, une extrudeuse ou une calandre, la température de mélange étant avantageusement inférieure à 200°C, et, de préférence, au moins égale à 120°C.

Les articles selon l'invention trouvent des applications avantageuses pour la fabrication de plaques d'épaisseur comprise entre 1 et 10 mm environ et surtout pour la fabrication de films d'épaisseur comprise entre 10 et 500 µm environ. Des plaques selon l'invention peuvent être obtenues par les techniques de compression et d'injection. Des films selon l'invention peuvent être obtenus par extrusion à travers une filière plate ou bien par extrusion-soufflage à une température de préférence comprise entre 100°C et 180°C environ et avec un taux de gonflage de préférence compris entre 1,5 et 3,5 environ.

Les exemples ci-après sont donnés à titre illustratif et non limitatif de la présente invention.

EXEMPLES 1 et 2

On considère un copolymère d'indice de fluidité (déterminé à 190°C sous 2,16 kg selon la norme ASTM D-1238) égal à 2,5 dg/min., comprenant 84,5% en poids d'éthylène et 15,5% en poids d'acrylate de méthyle. Ce copolymère présente un taux de cristallinité, déterminé par diffraction du rayonnement X, égal à 19%. A 100 parties en poids de ce copolymere on ajoute X parties en poids d'éthylène-bis-oléamide par mélangeage sur un mélangeur bi-vis Brabender fonctionnant a une température de 110°C et 150°C et à une vitesse de 40 t/min. Le mélange obtenu est ensuite extrudé en film de 50 µm d'épaisseur sur une extrudeuse B 30 Troester dans les conditions suivantes :

- profil de température : 120°C à 170°C,
- diamètre de la filière : 40 mm,
- entrefer : 1 mm,
- taux de gonflage : 2,5,
- vitesse de la vis : 90 tours par minute,
- vitesse de tirage : 4 mètres par minute.

Sur le film obtenu on mesure :

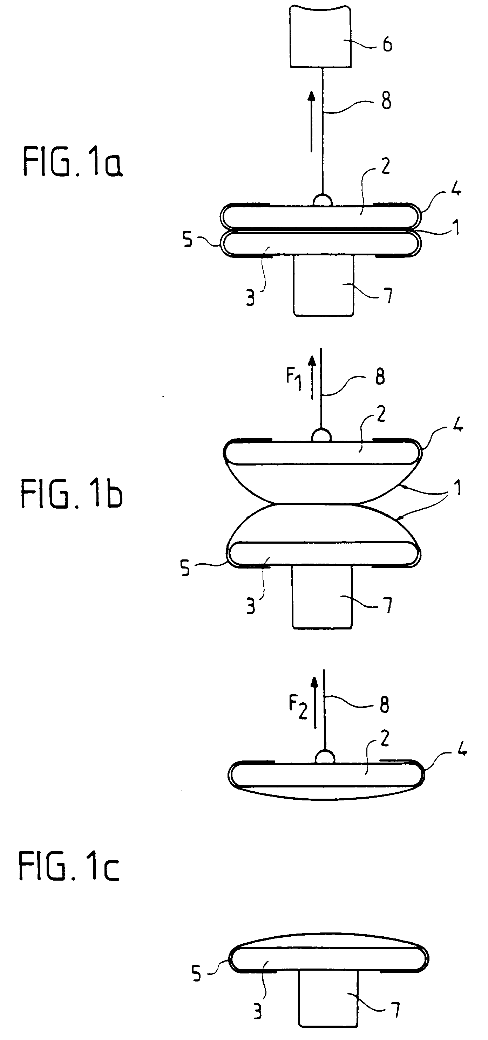

- le trouble optique T, exprimé en pourcentage et déterminé selon la méthode de la norme NFT 54 111,
- le caractère bloquant B, exprimé en grammes et déterminé selon la méthode suivante, décrite en référence à la figure en annexe. Un échantillon de film (1) est placé entre deux plateaux rectangulaires (2) et (3) de dimensions 100 mm x 76 mm. Les extrémités (4) et (5) du film dépassant des plateaux sont ouvertes et fixées à la partie extérieure des plateaux au moyen d'un adhésif. Les deux plateaux sont placés horizontalement entre les mâchoires (6) et (7) d'une machine d'essais de rupture. Le plateau supérieur (2) est lié à la mâchoire supérieure (6) de la machine au moyen d'une chaîne (8) permettant une mobilité du plateau dans toutes les directions (figure la). Le plateau (2) est alors déplacé verticalement à la vitesse de 36 mm par minute. Dans une première étape (figure 1b) la méthode consiste à déterminer la force $F_1$ nécessaire pour séparer les deux couches du film. La seconde étape (figure lc) consiste à déterminer la force $F_2$ à appliquer pour déplacer le plateau (2) une fois les deux couches du film séparées. Le caractère bloquant B est défini par la relation $B = F_1-F_2$.

Le tableau ci-après indique les propriétés obtenues en fonction de la quantité X d'éthylène-bis-oléamide.

EXEMPLES 3 à 6 (Comparatifs)

Le mode opératoire de l'Exemple 1 est reproduit avec le même copolymère mais en remplaçant l'éthylène-bis-oléamide par :

- un talc commercialisé par la société TALCS DE LUZENAC sous la dénomination 100 MOOS (Exemples 3 et 4),

- l'éthylène-bis-stéaramide (Exemples 5 et 6).

Les propriétés obtenues en fonction de la quantité X d'additif sont indiquées dans le tableau ci-après.

TABLEAU

| Exemples | 1 | 2 | 3 | 4 | 5 | 6 |
|---|---|---|---|---|---|---|
| X | 0,25 | 0,75 | 1,0 | 5,0 | 0,25 | 0,75 |
| B | 20 | 15 | 180 | 20 | 60 | 20 |
| T | 10,3 | 8,8 | 15,6 | 49,4 | 9,3 | 14,9 |

EXEMPLE 7

On considère un copolymère d'indice de fluidité (déterminé à 190°C sous 2,16 kg selon la norme ASTM D-1238) égal à 0,3 dg/min., comprenant 84,5% en poids d'éthylène et 15,5% en poids d'acrylate de méthyle. Ce copolymère présente un taux de cristallinité de 19%. A 100 parties en poids de ce copolymère on ajoute 0,5% en poids d'éthylène-bis-oléamide par mélangeage dans les conditions de l'Exemple 1. Le mélange obtenu est ensuite extrudé en film de 180 µm d'épaisseur dans les conditions de l'Exemple 1.

Sur le film obtenu on mesure :

- le coefficient de frottement dynamique, déterminé selon la norme NFT 54 112, égal à 0,06,
- le caractère bloquant, déterminé selon la méthode décrite à l'Exemple 1, égal à 6 g.

EXEMPLES 8 à 10

Le mode opératoire de l'Exemple 7 est reproduit avec le même copolymère mais en remplaçant l'éthylène-bis-oléamide par :

- 1% de stéarate de zinc (Exemple 8) : dans ce cas le coefficient de frottement dynamique est égal à 0,87 et le caractère bloquant égal à 8 g,
- 0,5% d'éthylène-bis-stéaramide (Exemple 9) : dans ce cas le coefficient de frottement dynamique est égal à 1,20 et le caractère bloquant égal à 30 g,
- un mélange de 1% de talc, de 0,25% d'éthylène-bis-stéaramide et de 1% de stéarate de zinc (Exemple 10) : dans ce cas le coefficient de frottement dynamique est égal à 0,87 et le caractère bloquant égal à 5 g.

**Revendications**

**1.** Fibres, films ou plaques glissants, anti-bloquants et de qualité optique comprenant au moins un copolymère d'éthylène de cristallinité ne dépassant pas 30%, caractérisés en ce qu'ils comprennent en outre une quantité efficace d'éthylène-bis-oléamide.

**2.** Produits selon la revendication 1, caractérisés en ce que le copolymère d'éthylène est un copolymère polaire de l'éthylène ayant une teneur en comonomères au moins égale à 0,09 mole pour 100 g de copolymère.

**3.** Produits selon la revendication 2, caractérisés en ce que le copolymère polaire de l'éthylène est choisi parmi les copolymères d'éthylène et d'au moins un acrylate ou méthacrylate d'alkyle dont le groupe alkyle a de 1 à 10 atomes de carbone, les copolymères d'éthylène et d'au moins un ester vinylique, les terpolymères éthylène/(méth)acrylate d'alkyle/anhydride d'acide dicarboxylique insaturé, les copolymères éthylène/monomère glycidylique insaturé et terpolymères éthylène/monomère éthylénique insaturé/monomère glycidylique insaturé, les copolymères éthylène/anhydride d'acide dicarboxylique insaturé/poly(méth)acrylate de polyol et les copolymères éthylène/(méth)acrylate d'alkyle/N-carboxyalkylimide d'acide dicarboxylique insaturé.

**4.** Produits selon la revendication 1, caractérisés en ce que le copolymère d'éthylène est un copolymère de l'éthylène et d'au moins une alpha-oléfine ayant de 3 à 8 atomes de carbone dont la densité n'est pas supérieure à 0,910.

**5.** Produits selon l'une des revendications 1 à 4, caractérisés en ce qu'ils comprennent en outre un polymère ou copolymère de l'éthylène de cristallinité supérieure à 30% ou encore un polymère ou copolymère de propylène.

**6.** Produits selon l'une des revendications 1 à 4, caractérisés en ce que le copolymère d'éthylène possède un indice de fluidité compris entre 0,1 et 10 dg/min.

**7.** Produits selon l'une des revendications 1 à 6, caractérisés en ce qu'ils comprenent au plus 0,8% en poids d'éthylène-bis-oléamide par rapport au copolymère d'éthylène de cristallinité ne dépassant pas 30%.

**8.** Produits selon l'une des revendications 1 à 7, caractérisés en ce qu'ils comprenent en outre au moins un additif choisi parmi les anti-bloquants, les additifs améliorant le caractère glissant, les antioxydants, les absorbeurs de rayonnement ultraviolet, les extincteurs et les pigments minéraux et organiques.

**Patentansprüche**

**1.** Leichtgleitende nicht aneinanderklebende Fasern, Folien und Platten in optischer Qualität, die mindestens ein Ethylen-Copolymer mit einer Kristallinität von höchstens 30 % enthalten,
dadurch gekennzeichnet,
daß sie außerdem eine wirksame Menge 1,2-Bis(oleylamino)ethan enthalten.

**2.** Erzeugnisse nach Anspruch 1, dadurch gekennzeichnet, daß das Ethylen-Copolymer ein polares Ethylen-Copolymer mit einem Gehalt an Comonomeren von mindestens 0,09 mol/100 g Copolymer ist.

**3.** Erzeugnisse nach Anspruch 2, dadurch gekennzeichnet, daß das polare Ethylen-Copolymer unter Copolymeren von Ethylen mit mindestens einem Alkylacrylat oder Alkylmethacrylat mit einer $C_{1-10}$-Alkylgruppe, den Copolymeren von Ethylen mit mindestens einem Vinylester, Terpolymeren aus Ethylen, Alkyl(meth)acrylat und einem ungesättigten Dicarbonsäureanhydrid, Copolymeren aus Ethylen und einem ungesättigten Glycidylmonorner und Terpolymeren aus Ethylen, einem ethylenisch ungesättigten Monomer und einem ungesättigten Glycidylmonomer, Copolymeren aus Ethylen, einem ungesättigten Dicarbonsäureanhydrid und einem Polyacrylat oder Polymethacrylat eines Polyols sowie Copolymeren aus Ethylen, Alkyl(meth)acrylat und einem N-Carboxyalkylimid einer ungesättigten Dicarbonsäure ausgewählt ist.

**4.** Erzeugnisse nach Anspruch 1, dadurch gekennzeichnet, daß das Ethylen-Copolymer ein Copolymer aus Ethylen und mindestens einem $\alpha$-Olefin mit 3 bis 8 Kohlenstoffatomen ist, dessen Dichte nicht größer als 0,910 ist.

**5.** Erzeugnisse nach einem der Ansprüche 1 bis 4, dadurch gekennzeichnet, daß sie außerdem ein Ethylenpolymer oder Ethylen-Copolymer mit einer Kristallinität von mehr als 30 % oder außerdem ein Propylenpolymer oder Propylen-Copolymer enthalten.

**6.** Erzeugnisse nach einem der Ansprüche 1 bis 4, dadurch gekennzeichnet, daß das Ethylen-Copolymer einen Schmelzindex im Bereich von 0,1 bis 10 dg/min aufweist.

**7.** Erzeugnisse nach einem der Ansprüche 1 bis 6, dadurch gekennzeichnet, daß sie höchstens 0,8 Gew.-% 1,2-Bis(oleylamino)ethan, bezogen auf das Ethylen-Copolymer mit einer Kristallinität von höchstens 30 %, enthalten.

**8.** Erzeugnisse nach einem der Ansprüche 1 bis 7, dadurch gekennzeichnet, daß sie außerdem mindestens ein Additiv enthalten, das unter nicht aneinanderklebenden Füllstoffen, Füllstoffen zur Verbesserung des Gleiter-Werts, Oxidationsinhibitoren, UV-Absorbern, Löschern und anorganischen und organischen Pigmenten ausgewählt ist.

**Claims**

**1.** Slippery, antiblocking and optical quality fibres, films or sheets comprising at least one ethylene copolymer with a crystallinity not exceeding 30 %, characterized in that they additionally comprise an effective quantity of ethylenebisoleamide.

**2.** Products according to Claim 1, characterized in that the ethylene copolymer is a polar copolymer of ethylene which has a comonomer content of at least 0.09 mol per 100 g of copolymer.

**3.** Products according to Claim 2, characterized in that the polar copolymer of ethylene is chosen from the copolymers of ethylene and of at least one alkyl acrylate or methacrylate whose alkyl group has from 1 to 10 carbon atoms, the copolymers of ethylene and of at least one vinyl ester, ethylene/alkyl (meth)acrylate/unsaturated dicarboxylic acid anhydride terpolymers, ethylene/unsaturated glycidyl monomer copolymers and ethylene/unsaturated ethylenic monomer/unsaturated glycidyl monomer terpolymers, ethylene/unsaturated dicarboxylic acid anhydride/polyol poly (meth)acrylate copolymers and ethylene/alkyl (meth)acrylate/unsaturated dicarboxylic acid N-carboxyalkylimide copolymers.

**4.** Products according to Claim 1, characterized in that the ethylene copolymer is a copolymer of ethylene and of at least one alpha-olefin containing from 3 to 8 carbon atoms, whose density is not higher than 0.910.

**5.** Products according to one of Claims 1 to 4, characterized in that they additionally comprise an ethylene polymer or copolymer with a crystallinity which is higher than 30 % or a propylene polymer or copolymer.

**6.** Products according to one of Claims 1 to 4, characterized in that the ethylene copolymer has a melt index of between 0.1 and 10 dg/min.

**7.** Products according to one of Claims 1 to 6, characterized in that they comprise not more than 0.8 % by weight of ethylenebisoleamide relative to the ethylene copolymer with a crystallinity not exceeding 30 %.

**8.** Products according to one of Claims 1 to 7, characterized in that they additionally comprise at least one additive chosen from antiblocking agents, slip-improving additives, antioxidants, ultraviolet radiation absorbers, extinguishers and inorganic and organic pigments.

FIG. 1a

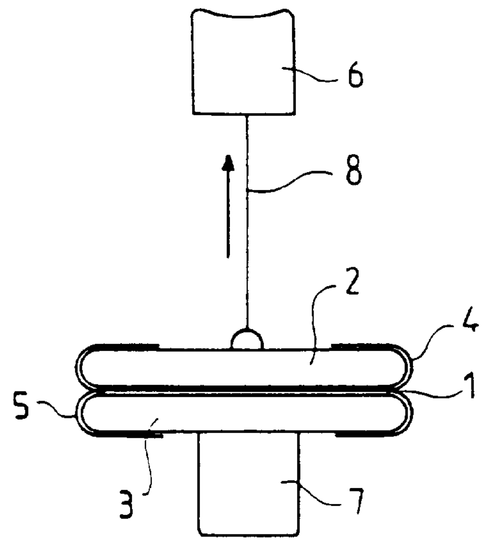


FIG. 1b

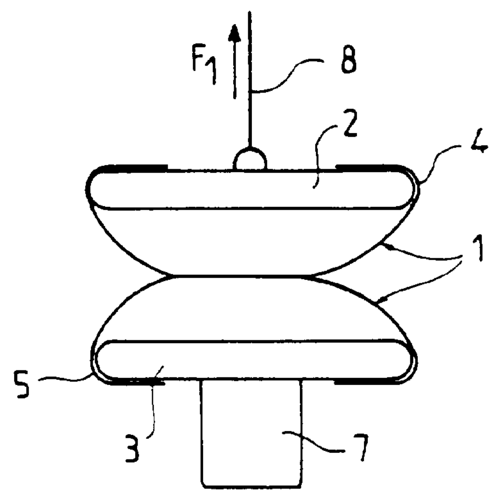


FIG. 1c